## Europäisches Patentamt

## European Patent Office

## Office européen des brevets

(11) Veröffentlichungsnummer: **0 188 660**
**B1**

(12) **EUROPÄISCHE PATENTSCHRIFT**

(45) Veröffentlichungstag der Patentschrift:
**19.04.89**

(51) Int. Cl.⁴: **B 65 G 15/34**

(21) Anmeldenummer: **85111551.9**

(22) Anmeldetag: **12.09.85**

(54) **Verbindung der Enden von Fördergurten.**

(30) Priorität: **24.11.84 DE 3442979**

(43) Veröffentlichungstag der Anmeldung:
**30.07.86 Patentblatt 86/31**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**DE-A-1 805 364**
**DE-A-2 644 454**
**DE-A-2 916 253**
**DE-A-3 238 584**
**DE-A-3 303 773**
**DE-B-1 920 480**
**DE-B-2 455 006**

(73) Patentinhaber: **Continental Aktiengesellschaft, Königsworther Platz 1, D-3000 Hannover 1 (DE)**

(72) Erfinder: **Sohnemann, Richard, Dr., Dörtalsweg 54, D-3410 Northeim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung bezieht sich auf Verbindungen der Enden von Fördergurten aus Gummi oder gummiähnlichen Kunststoffen gemäß dem Oberbegriff des Patentanspruchs 1 (bekannt aus DE-A-2 916 253).

Das Auflegen eines Fördergurtes auf seine Trag- und Führungsvorrichtung schließt stets auch die Notwendigkeit zum Verbinden jeweils zweier Gurtenden miteinander ein. Einstückig angelieferte Gurte für verhältnismäßig kurze Förderstrecken sind in jedem Falle endlos zu machen. In der Regel sind die Gurte aber aus mehreren Abschnitten von aus fertigungstechnischen Gründen oder wegen der Transportmöglichkeiten begrenzten Teillängen zusammenzusetzen, so daß sie im gebrauchsfertigen Zustand eine Vielzahl von über ihre Gesamtlänge verteilten Endlosverbindungen aufweisen. Die Verbindungsstellen setzen nicht nur jede für sich die übertragbaren Zugkräfte herab, sondern sie beeinflussen darüber hinaus auch das dynamische Verhalten der Gurte und ihre Belastbarkeit. Die für einlagige - das heißt, mit nur einer einzigen Verstärkungseinlage versehenen - Fördergurte üblichen Spleißverbindungen sind mit fingerartig ineinanderfassenden Vorsprüngen der nach einem Zickzack- oder einem Wellenmuster ausgeschnittenen Lagenenden ausgebildet. Die zum Abdecken des Verbindungsbereiches notwendigen zusätzlichen Gewebelagen befinden sich dabei in jedem Falle außerhalb der neutralen Gurtzone und unterliegen infolgedessen in den Umschlingungsbogen der Antriebs- und Umlenktrommeln ständigen wechselnden Stauch- und Zugbeanspruchungen. Sie müssen daher elastisch dehnbar ausgebildet sein und können schon aus diesem Grunde von vornherein die Gurtfestigkeitswerte nicht annähernd erreichen, wodurch wiederum auch die Gesamtfestigkeit der betroffenen Fördergurte herabgesetzt wird. Es hat sich außerdem gezeigt, daß die stumpf aneinanderstoßenden Enden der Festigkeitsträger im Falle hochfester und vergleichsweise starrer Werkstoffe - wie beispielsweise bei Verwendung von Stahlseilen, Aramidfäden oder dergl. - sich unter Umständen abheben und durch die Abdeckgewebe hindurcharbeiten können. Als besonderer Nachteil der sogenannten Fingerverbindungen wird schließlich auch der zum Herstellen notwendige hohe Arbeits- und Zeitaufwand empfunden.

Aus der DE-A-2 916 253 ist zwar eine Gurtverbindung bekannt, bei der man versucht hat, eine Versteifung des Verbindungsbereiches zu vermeiden, indem man die Hauptfestigkeitsträger im Abstand zueinander enden läßt und lediglich zusätzliche Gewebezugträgereinlagen, die beiderseits der Hauptfestigkeitsträger den gesamten Gurt verstärken, im Verbindungsbereich überlappt; jedoch ist die Herstellung einer solchen Verbindung sehr zeitaufwendig und erfordert erhebliche fachmännische Geschicklichkeit, da zunächst an beiden Gurtenden die eingebetteten Hauptfestigkeitsträger und die Gewebeeinlagen sorgfältig voneinander getrennt und von anhaftendem Gummi befreit werden müssen, bevor die Hauptfestigkeitsträger gekürzt und die Gewebeeinlagen zur Überlappung gebracht werden können. Trotz dieser komplizierten Verfahrensweise stellt die bekannte Gurtverbindung eine störende Inhomogenität im Ablauf des Gurtes dar.

Bei einer anderen, aus der DE-A-3 303 773 bekannten Gurtverbindung konnten diese Nachteile zwar weitgehend verringert werden, da nur zwei Festigkeitsträger herausgeschält und miteinander überlappt werden; jedoch kann sich auch hier durch zusätzliche Verbindungs-Gewebestreifen eine lokale Versteifung des Gurtes ergeben.

Es ist demgegenüber die Aufgabe der Erfindung, die Endlosverbindungen in Einlagen-Fördergurten durch eine neuartige Gestaltung mit beträchtlich vermindertem Aufwand an Zeit und Kosten herstellen zu können und gleichzeitig sie in ihrem Biegeverhalten und ihrer dynamischen Belastbarkeit zu verbessern und auch festigkeitsmäßig dem unversehrten Gurt anzugleichen.

Diese Aufgabe wird erfindungsgemäß dadurch gelöst, daß die textilen Einlagen nur den Verbindungsbereich überdecken, die Enden der Festigkeitsträger mit einem weiten Abstand einander zugekehrt und die den Abstand überbrückenden zusätzlichen textilen Einlagen zwischen den Enden der Festigkeitsträger auf eine diesen gemeinsame Mittelebene unter Einschluß einer haftungsvermittelnden Gummi- bzw. Kunststoff-Zwischenschicht zusammengeführt sind. Als "weit" ist dabei ein das übliche stumpfe Aneinanderstoßen der Festigkeitsträgerenden deutlich überschreitendes Abstandsmaß anzusehen, das jedoch den Wert der Gurtbreite nicht überschreitet. Nur unter dieser Voraussetzung ist die mit der Erfindung angestrebte Überbrückung des freien Zwischenraumes zwischen den einander zugekehrten Festigkeitsträgerenden durch die gleichsam die Verlängerung der Festigkeitsträger bildenden zusammengeführten textilen Einlagen möglich.

Die Erfindung führt zur Bildung von dynamisch hoch beanspruchungsfähigen und gleichzeitig auch in Gurtlängsrichtung hochfesten Verbindungsstellen, die den Nachteilen bekannter Verbindungssysteme nicht mehr unterliegen. Durch den Verzicht auf das bisher als unumgänglich angesehene Ineinanderschachteln der gezackt bzw. wellig ausgeschnittenen Gurtkernenden wird der mit dem Herstellen der Verbindungen verknüpfte Arbeitsaufwand beträchtlich eingeschränkt; denn es brauchen die mit geradlinigen Kanten geschnittenen Enden nur noch von dem Gummi bzw. dem Kunststoff der Deckplatten befreit zu werden, worauf die zusätzlichen textilen Einlagen aufgelegt und in den Freiraum zusammengeführt werden können. Als üblicher abschließender Schritt folgt dann das Auffüllen mit Deckplattenmaterial und das Vulkanisieren bzw. Vernetzen der Verbindung. Die erfindungsgemäß zwischen die einander nicht berührenden Festigkeitsträgerenden mit haftender Bindung an beiden Seiten des Gurtkernes eingesetzte Brücke aus zwei dicht aufeinanderliegenden Textillagen verleiht der fertigen Verbindung eine gelenkartige Biegewilligkeit und ergibt gleichzeitig einen ungestörten Kraftübergang zwischen den Festigkeitsträgern ohne Richtungsauslenkung und daraus entstehende schädliche Biegemomente. Dies ermöglicht wiederum eine Materialauswahl für die zusätzlichen Einlagen allein oder in erster Linie nach den Festigkeitserfordernissen, so daß mit der dynamischen Belastbarkeit der Verbindungen auch ihre Längszugfestigkeit auf die für den Gurt selbst geltenden Werte gebracht werden können, ohne dafür unerwünschte örtliche Verdickungen oder andere Nachteile in Kauf nehmen zu müssen.

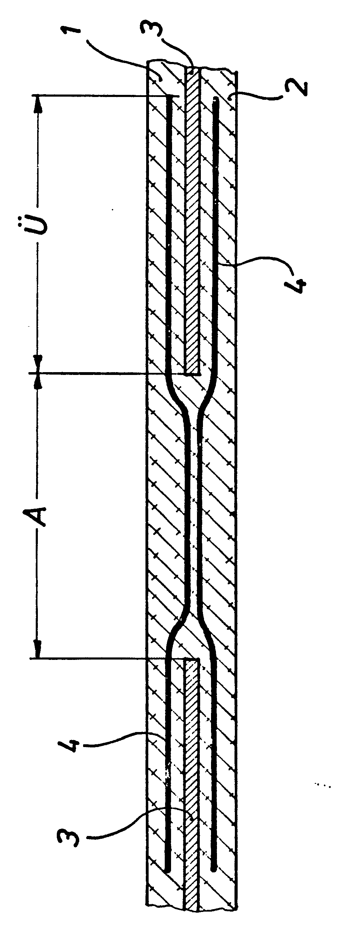

Die Erfindung ist anhand der schematischen Darstellung eines Ausführungsbeispiels in der Zeichnung verdeutlicht. Die Zeichnung zeigt einen Längsschnitt durch ein Teilstück eines Einlagen-Fördergurtes im Bereich einer Verbindungsstelle.

Der gezeichnete Fördergurt ist in einem Dreischichtenaufbau aus zwei äußeren Gummi-Deckplatten 1, 2 und einer zwischen diesen eingebetteten den Gurtkern bildenden Festigkeitsträgerlage 3 zusammengesetzt. Die Festigkeitsträger können ein zusammenhängendes Gewebe, beispielsweise auch ein sogenannter drahtgewebter Fadenverband sein; die Erfindung schließt aber auch die Verwendung von einzeln eingebetteten Festigkeitsträgern in Form von Drahtseilen oder hochfesten Kunststoffdrähten u. dgl. ein.

Der Bereich der Verbindungsstelle ist durch auf die Festigkeitsträger 3 auf beiden Seiten aufgelegte und haftend mit diesen verbundene zusätzliche textile Einlagen 4 festgelegt. Die beispielsweise als gummierte Gewebe angelieferten Einlagen sind festigkeitsmäßig so ausgesucht, daß sie jede etwa die Hälfte der Gurtfestigkeit aufbringen. In dem freien Zwischenraum zwischen den einander zugekehrten Enden der Festigkeitsträger sind die Einlagen 4 in enger Berührung ihrer Überflächengummierung miteinander zusammengeführt, so daß sie in gerder Fortsetzung der Festigkeitsträger 3 eine zugkraftübertragende Brücke zwischen diesen bilden. Der Abstand A zwischen den Festigkeitsträgerenden ist zweckmäßig in einer der Überdeckungslänge Ü im wesentlichen entsprechenden Größenordnung bemessen.

Die Einlagen 4 können in ihren Überdeckungsbereichen in Gurtlängsrichtung gewellt oder gekräuselt angeordnet oder aus ihrer Gewebestruktur in begrenztem Maße elastisch dehnbar ausgebildet sein, um den beim Umlaufen um die Antriebs- und Umkehrtrommeln aufgezwungenen Zerrungen und Stauchungen leichter folgen zu können.

**Patentansprüche**

1. Verbindung der Enden von Fördergurten aus Gummi oder gummiähnlichen Kunststoffen mit einer im Gurtkern durchlaufend eingebetteten Lage von Festigkeitsträgern (3), wobei die einander zugekehrten Enden der Festigkeitsträger (3) von beiderseits zusätzlich aufgelegten textilen Einlagen (4) überdeckt sind, dadurch gekennzeichnet, daß die textilen Einlagen nur den Verbindungsbereich (A + 2Ü) überdecken, die Enden der Festigkeitsträger (3) mit einem weiten Abstand (A) einander zugekehrt und die den Abstand überbrückenden zusätzlichen textilen Einlagen (4) zwischen den Enden der Festigkeitsträger (3) auf eine diesen gemeinsame Mittelebene unter Einschluß einer haftungsvermittelnden Gummi- bzw. Kunststoff-Zwischenschicht zusammengeführt sind.

2. Verbindung nach Anspruch 1, dadurch gekennzeichnet, daß die Schichtdicke der haftungsvermittelnden Zwischenschicht in einer der Oberflächenrauhigkeit der textilen Einlagen (4) entsprechenden Größenordnung bemessen ist.

3. Verbindung nach den Ansprüchen 1 und 2, dadurch gekennzeichnet, daß die Zugfestigkeit der textilen Einlagen (4) in Längsrichtung des Fördergurtes jeweils in einer mindestens der halben Gurtfestigkeit entsprechenden Größenordnung bemessen ist.

4. Verbindung nach Anspruch 3, dadurch gekennzeichnet, daß die textilen Einlagen (4) in den die Enden der Festigkeitsträger (3) überdeckenden Bereichen (Ü) in Längsrichtung des Fördergurtes dehnungsfähig ausgebildet oder angeordnet sind.

5. Verbindung nach Anspruch 4, dadurch gekennzeichnet, daß die textilen Einlagen (4) die Enden der Festigkeitsträger (3) in Längsrichtung des Fördergurtes wellenförmig gekräuselt überdecken.

6. Verbindung nach den Ansprüchen 1 bis 5, dadurch gekennzeichnet, daß der Abstand (A) zwischen den einander zugekehrten Enden der Festigkeitsträger (3) in einer einem Bruchteil bis zu höchstens dem ganzen Wert der Gurtbreite entsprechenden Größenordnung bemessen ist.

7. Verbindung nach den Ansprüchen 1 bis 6, dadurch gekennzeichnet, daß die Lange jeweils eines Überdeckungsbereiches (Ü) der textilen Einlagen in einer dem Abstand (A) zwischen den einander zugekehrten Enden der Festigkeitsträger (3) entsprechenden Größenordnung bemessen ist.

## Claims

1. Connection of the ends of conveyor belts formed from rubber or rubber-like plastics materials, having a layer of reinforcing members (3) which are embedded throughout the core of the belt, the ends of the reinforcing members (3) which face one another being covered by textile inserts (4) which are additionally disposed at each end, characterised in that the textile inserts only cover the connection region (A + 2Ü), the ends of the reinforcing members (3) face one another with a wide spacing (A) therebetween, and the additional textile inserts (4), which span the spacing, between the ends of the reinforcing members (3) are brought together onto a central plane, which is common to the reinforcing members, by the inclusion of an adhesive intermediate layer of rubber or plastics material.

2. Connection according to claim 1, characterised in that the layer thickness of the adhesive intermediate layer is dimensioned to be of an order of magnitude corresponding to the surface roughness of the textile inserts (4).

3. Connection according to claims 1 and 2, characterised in that the tensile strength of each of the textile inserts (4) in the longitudinal direction of the conveyor belt is dimensioned to be of an order of magnitude corresponding to at least half the strength of the belt.

4. Connection according to claim 3, characterised in that the textile inserts (4) in the regions (Ü) covering the ends of the reinforcing members (3) are adapted to be extensible, or are disposed, in the longitudinal direction of the conveyor belt.

5. Connection according to claim 4, characterised in that the textile inserts (4) cover the ends of the reinforcing members (3) in the longitudinal direction of the conveyor belt in an undulatory, rippled manner.

6. Connection according to claims 1 to 5, characterised in that the spacing (A) between the ends of the reinforcing members (3) facing one another is dimensioned to be of an order of magnitude corresponding to a value ranging from a fraction to, at most, the whole extent of the belt width.

7. Connection according to claims 1 to 6, characterised in that the length of each cover region (Ü) of the textile inserts is dimensioned to be of an order of magnitude corresponding to the spacing A) between the ends of the reinforcing members (3) facing one another.

## Revendications

1. Jonction des extrémités de bandes transporteuses en caoutchouc ou en matières plastiques analogues au caoutchouc comportant une couche d'éléments de renforcement (3) noyée de façon continue dans l'âme de la bande, les extrémités, dirigées l'une vers l'autre, des éléments de renforcement (3) étant recouvertes par des inserts textiles (4) placés additionnellement sur leurs deux côtés, caractérisée en ce que les inserts textiles recouvrent seulement la zone de jonction (A + 2Ü), les extrémités des éléments de renforcement (3) sont dirigées l'une vers l'autre avec un large espacement (A) et les inserts textiles additionnels (4) recouvrant l'intervalle d'espacement entre les extrémités des éléments de renforcement (3) sont rapprochés mutuellement du plan médian commun à ces derniers avec interposition d'une couche intermédiaire en caoutchouc ou en matières plastiques créant de l'adhérence.

2. Jonction selon la revendication 1, caractérisée en ce que l'épaisseur de la couche intermédiaire de création d'adhérence est d'un ordre de grandeur correspondant à la rugosité superficielle des inserts textiles (4).

3. Jonction selon une des revendications 1 et 2, caractérisée en ce que la résistance à la traction de chacun des inserts textiles (4) dans la direction longitudinale de la bande transporteuse est d'un ordre de grandeur correspondant au moins à la moitié de la résistance de la bande.

4. Jonction selon la revendication 3, caractérisée en ce que les inserts textiles (4) sont agencés ou disposés, dans les zones (Ü) recouvrant les extrémités des supports résistants (3), de manière à pouvoir s'allonger dans la direction longitudinale de la bande transporteuse.

5. Jonction selon la revendication 4, caractérisée en ce que les inserts textiles (4) recouvrent avec une forme ondulée ou frisée les extrémités des éléments de renforcement (3) dans la direction longitudinale de la bande transporteuse.

6. Jonction selon une des revendications 1 à 5, caractérisée en ce que l'espacement (A) entre les extrémités, dirigées l'une vers l'autre, des éléments de renforcement (3), est d'un ordre de grandeur compris entre une fraction et au maximum la totalité de la largeur de la bande transporteuse.

7. Jonction selon une des revendications 1 à 6, caractérisée en ce que la longueur d'une zone respective de recouvrement (Ü) des inserts textiles est d'un ordre de grandeur correspondant à l'espacement (A) entre les extrémités, dirigées l'une vers l'autre, des éléments de renforcement (3).